# FASCICULE DE BREVET EUROPEEN

(11) **EP 3 558 758 B1**
(45) Date de publication et mention de la délivrance du brevet: **10.02.2021**
(21) Numéro de dépôt: 17832257.4
(22) Date de dépôt: 19.12.2017
(51) Int. Cl.: B60R 19/34

(54) **ABSORBEUR DE CHOC POUR VÉHICULE AUTOMOBILE ET POUTRE DE CHOCS COMPORTANT CET ABSORBEUR DE CHOC**
STOSSDÄMPFER FÜR KRAFTFAHRZUEG FAHRZEUG UND STOSSFÄNGERTRÄGER MIT EINEM SOLCHEN STOSSDÄMPFER
SHOCK ABSORBER FOR AUTOMOTIVE VEHICLE AND BUMPER BEAM WITH SUCH A SHOCK ABSORBER

(30) Priorité: 23.12.2016 CN 201621425849 U
(43) Date de publication de la demande: 30.10.2019
(73) Titulaire: Compagnie Plastic Omnium, 69007 Lyon (FR)
(72) Inventeur: GINJA, Stéphane, 01500 Amberieu En Bugey (FR)
(74) Mandataire: LLR
(86) Numéro de dépôt international: PCT/FR2017/053682
(87) Numéro de publication internationale: WO 2018/122494

(56) Documents cités:
- EP-A2- 2 930 067
- DE-B3-102013 000 459
- FR-A1- 2 842 152

## Description

La présente invention concerne un absorbeur de choc pour véhicule automobile et une poutre de chocs comportant cet absorbeur de choc.

En règle générale, les poutres de chocs des véhicules automobiles comportent une traverse de forme convexe résistant aux chocs et deux absorbeurs de choc latéraux qualifiés d'« absorbeurs de choc » (crash box) ; ces absorbeurs sont des modules d'absorption des chocs, et leur but est d'absorber l'énergie par déformation lorsqu'un choc se produit.

Les absorbeurs de choc sont configurés de façon à être placés entre la traverse et les deux longerons du véhicule automobile. Dès lors, les absorbeurs de choc sont fixés sur la traverse par des modes d'assemblage tels que rivetage, collage, soudage, etc. Le but est de préserver, pendant le choc, et quel que soit le type de choc, l'intégrité de la liaison entre la traverse et les absorbeurs de choc.

Habituellement, la poutre de chocs est fabriquée en acier ou en aluminium. Le défaut des absorbeurs de choc fabriqués en acier est qu'ils ont une masse relativement importante ; celui des absorbeurs de choc fabriqués en aluminium, bien qu'ils soient plus légers, est que leur coût est plus élevé.

On connaît encore des poutres de chocs en matériau composite ; ces poutres de chocs comprennent une traverse et deux absorbeurs qui sont réalisés en matériau thermoplastique. Ce type d'absorbeur est plus léger que les absorbeurs métalliques, mais lors des chocs, le taux d'absorption de l'énergie est plus faible, aussi ce type d'absorbeur n'est-il pas adapté aux véhicules dont la masse dépasse 1400 kilogrammes.

Le document EP 2930067 A2 décrit une poutre de pare-chocs de véhicule, comprenant une traverse et au moins un absorbeur de chocs en matériau plastique composite éventuellement renforcé de fibres. L'absorbeur de chocs est fixé par une extrémité à la traverse et par une autre extrémité à un longeron du véhicule.

Le but de la présente invention est notamment d' optimiser la capacité de résistance au choc de la traverse par le biais de l'optimisation des caractéristiques mécaniques des absorbeurs, tout en tenant compte de critères tels que l'efficacité économique et la masse.

Pour cela, l'objet de la présente invention est un absorbeur de choc pour véhicules automobiles selon la revendication 1.

Tout d'abord, étant donné que le corps principal de l'absorbeur de choc est fabriqué en matière plastique, il présente, par rapport aux absorbeurs métalliques, des avantages aussi bien en termes de masse que de prix ; la présence de l'insert métallique permet de renforcer localement la résistance mécanique de l'absorbeur de choc, si bien qu'il peut être utilisé sur un plus grand nombre de types de véhicules, et pas seulement sur les véhicules dont la masse est inférieure ou égale à 1400 kilogrammes.

Par ailleurs, étant donné que l'insert métallique est un élément indépendant intégré à l'absorbeur de choc, ses dimensions et son épaisseur peuvent être ajustées de façon flexible en fonction des besoins concrets des véhicules, et il n'est donc pas nécessaire de modifier l'ensemble du design de l'absorbeur.

En outre, étant donné que l'insert métallique relie les deux extrémités de l'absorbeur de choc, lorsqu'un choc se produit, si le plastique de l' absorbeur de choc est brisé, l'insert métallique permet de conserver la liaison entre les deux extrémités de l'absorbeur de choc, notamment la liaison entre la traverse et la caisse. La fixation de l' absorbeur sur la traverse et sur la caisse par le biais de l'insert métallique permet de réduire la charge imposée par la fixation au corps principal de l'absorbeur de choc en plastique.

L'absorbeur de choc peut présenter de façon exclusive, ou en combinaison, l'une ou plusieurs des caractéristiques suivantes :
- L'au moins un insert métallique est en forme de bandelette. La bandelette s'étend d'une extrémité servant à fixer l' absorbeur de choc sur la traverse jusqu'à l'autre extrémité servant à fixer l'absorbeur de choc sur la caisse. L'insert métallique en forme de bandelette est adapté structurellement à toute forme, il permet de renforcer localement l'absorbeur de choc, et sa masse peut être ajustée en jouant sur son épaisseur.
- L'une des extrémités de la bandelette comporte deux ramifications, tandis que l'autre extrémité ne comporte qu'une seule ramification, ce qui forme un tripode. L'insert métallique avec tripode peut être fixé plus solidement sur l'absorbeur, et permet de renforcer l'absorbeur en un nombre plus important d'endroits.

- Chacune des deux extrémités de la bandelette comportent deux ramifications, de sorte que la bandelette forme un quadripode.
- L'au moins un insert métallique est intégré à l' absorbeur de choc par un ou une combinaison des moyens suivants : surmoulage par injection, soudage, collage, vissage, rivetage, pincement, contact simple. Le surmoulage par injection permet de fixer l'insert métallique à l'intérieur de l'absorbeur de choc ou à sa surface, tandis que les fixations physiques telles que le soudage, le vissage, etc., permettent de fixer simplement l'insert métallique à la surface de l'absorbeur. L'insert métallique n'est pas forcément fixé sur l'absorbeur, sa forme peut être conçue de façon à le coller ou le pincer sur l'absorbeur.
- L' au moins un insert métallique est placé sur la surface extérieure de l'absorbeur de choc.
- L' absorbeur de choc selon l'invention possède une structure creuse, et au moins un insert métallique est placé sur une surface intérieure de l'absorbeur de choc.
- L'au moins un insert métallique est noyé dans la matière plastique de l'absorbeur de choc.
- L'au moins un insert métallique est revêtu d'un traitement de surface favorisant une adhésion chimique entre au moins un insert métallique et la matière plastique. En particulier, lorsque l'insert métallique est surmoulé par injection sur l'absorbeur, ce traitement permet de faire en sorte que l'insert métallique soit fixé plus solidement sur l'absorbeur de choc.
- L'au moins un insert métallique comporte un système de remorquage. En règle générale, les véhicules automobiles sont munis d'un système de remorquage ; lorsque le véhicule connaît un problème, le véhicule remorqueur peut le remorquer par le biais du système de remorquage. Le système de remorquage est intégré à l'insert métallique, ce qui lui permet d'avoir plus de fonctions, d'économiser l'espace, d'économiser la matière première, et de réduire la masse du véhicule.
- Le système de remorquage est muni d'une douille filetée . La douille filetée peut être adaptée au filetage du dispositif de remorquage, facilitant ainsi le remorquage.

Par ailleurs, la présente invention concerne une poutre de chocs, caractérisée en ce que la poutre de chocs comporte une traverse et au moins un absorbeur de choc.

Cette « poutre de chocs » est un composant assemblé ; elle comporte une traverse, et au moins un (en général deux) absorbeur de type « absorbeur de choc », ainsi que, préférablement, deux « platines » servant à fixer les absorbeurs sur les longerons du véhicule. Par ailleurs, on appelle en général « traverse » (ou barre transversale) un élément structurel long, rigide, s'étendant dans le sens transversal entre deux points de fixation. On appelle direction longitudinale X d'un véhicule automobile la direction de déplacement du véhicule ; la direction transversale Y et la direction verticale Z du véhicule sont perpendiculaires à cette direction longitudinale. En règle générale, la traverse est de forme convexe et s'étend à peu près dans le sens transversal Y du véhicule. On peut comprendre que l'absorbeur de choc est un module d'absorption de l'énergie de choc, sa fonction étant, au moment où un choc se produit, d'absorber l'énergie par déformation ; les absorbeurs de choc sont prioritairement des absorbeurs latéraux de type « absorbeur de choc » placés au moins en partie dans la direction du prolongement des longerons du véhicule ; chaque absorbeur a été conçu de façon à servir à absorber l'énergie d'impact dans le sens de l'axe des longerons qui supportent les absorbeurs.

La poutre de chocs peut encore présenter de façon exclusive, ou en combinaison, l'une ou plusieurs des caractéristiques suivantes :
- La poutre de chocs comporte au moins un insert métallique positionné entre la traverse et la partie en matière plastique dudit au moins un absorbeur de choc. Cet insert positionné entre le corps de l'absorbeur et la traverse peut servir à absorber immédiatement l'énergie lorsque la traverse subit un choc.
- La poutre de chocs comporte au moins un insert métallique ; cet insert métallique est positionné de façon à prendre en sandwich la traverse entre l'insert métallique et l'au moins un absorbeur de choc. L'insert métallique qui se trouve à l'extérieur de la poutre de chocs est le premier élément à subir le choc et distribue la force du choc entre la traverse et l'absorbeur de choc, de façon à faire en sorte que chacun des éléments joue au mieux son rôle d'absorption de l'énergie.
- Le nombre d'absorbeurs de choc est de deux.

La lecture des figures fournies en exemple et ne présentant pas de caractère limitatif permet de mieux comprendre la présente invention. Ces figures annexées sont les suivantes :
- La Figure 1 est une figure en trois dimensions d'un absorbeur de choc selon un mode de réalisation ;
- Les Figures 2 à 4 sont des figures en trois dimensions d'inserts métalliques d'absorbeurs de choc selon trois modes de réalisation ;
- Les Figures 5 et 6 sont des vues en coupe d'absorbeurs de choc selon deux modes de réalisation.

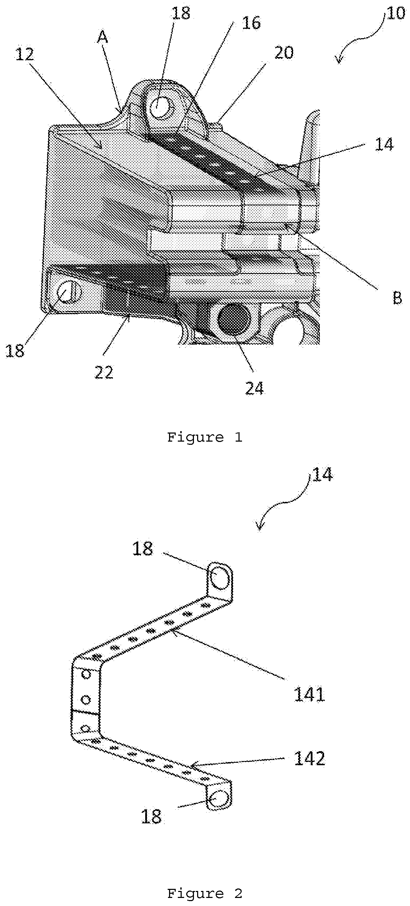

La Figure 1 montre un absorbeur de choc creux 10 pour véhicule automobile ; cet absorbeur de choc 10 comporte un corps principal 12 fabriqué en matière plastique et un insert métallique tripode 14. L'insert métallique 14 relie les deux extrémités A et B du corps principal 12.

L' insert métallique 14 comporte plusieurs orifices 16, il est fixé sur le corps principal 12 par le biais des orifices 16.

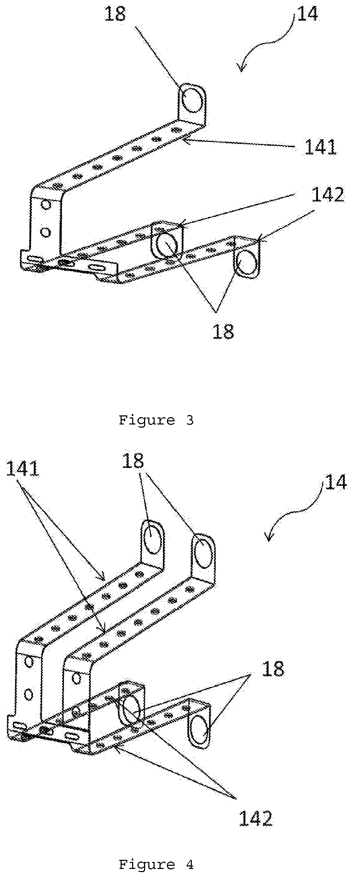

Dans le présent mode de réalisation, comme le montre la Figure 3, l'insert métallique 14 est une bandelette tripode ; l'une des extrémités de la bandelette comporte deux ramifications 142, l'autre extrémité comporte une ramification 141. La base de toutes les ramifications comporte un orifice 18 ; un orifice 18 se trouve également au niveau de l'extrémité A du corps principal, corps principal qui est fixé sur la platine 20 reliée à la caisse par le biais des orifices 18. L' insert métallique 14 est fixé à la platine reliée à la traverse au niveau de l'extrémité B.

L'insert métallique 14 peut également comporter le système de remorquage 22. Le système de remorquage 22 comporte un orifice qui vient se superposer à l'orifice 18 de la ramification 142 de l'insert métallique 14, et il est fixé sur la platine 20 par l'intermédiaire de cet orifice. Le système de remorquage 22 comprend encore un manchon fileté 24 ; le manchon 24 peut être vissé sur le filetage adapté au manchon que comporte le système de remorquage.

Il convient de comprendre que l'insert métallique 14 peut également être une bandelette bipode, chacune des extrémités de la bandelette comportant une ramification 141 ou 142 (Figure 2) . Il peut aussi s'agir d'une bandelette quadripode (Figure 4), chacune des extrémités comportant deux ramifications 141 ou 142 ; la bandelette peut encore avoir tout autre forme adaptée.

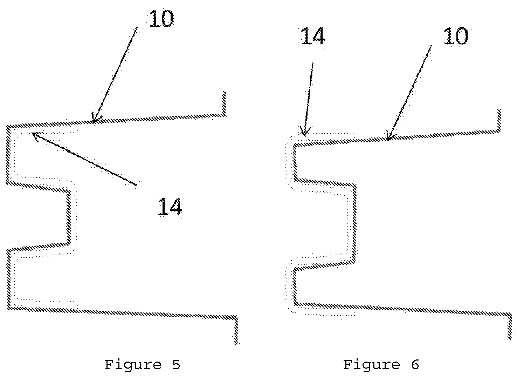

L' insert métallique 14 peut être placé sur une surface intérieure (Figure 5) ou extérieure (Figure 6) de l'absorbeur de choc 10. Alternativement, l'insert métallique 14 peut être noyé dans la matière plastique de l'absorbeur de choc 10. L'insert métallique 14 peut avantageusement comporter un traitement de surface favorisant l'adhésion chimique entre l'insert métallique et la matière plastique. Par ailleurs, un insert métallique similaire à l'insert métallique 14 peut être placé sur la surface extérieure de la traverse ou entre la traverse et le corps principal 12. Ce type d'insert métallique peut également être fixé sur une platine 20.

L'homme du métier doivent comprendre que, selon les besoins, l'absorbeur de choc 10 peut comporter plus d'un insert métallique 14, et que l'insert métallique 14 peut être intégré à l'absorbeur de choc par n'importe quelle méthode adaptée, par exemple : surmoulage par injection, soudage, collage, vissage, rivetage, pincement, contact simple.

La présente invention concerne encore une poutre de chocs (non représentée) ; cette poutre de choc comprend une traverse et au moins un absorbeur de choc tel que décrit ci-avant. Dans un mode de réalisation, la poutre de chocs comporte deux absorbeurs de choc placés sur la traverse. Entre la traverse et la partie en matière plastique de l'absorbeur de choc ont été installés un ou plusieurs inserts métalliques. Dans un autre mode de réalisation, la poutre de chocs comporte au moins un insert métallique ; le positionnement de cet insert métallique fait que la traverse est prise en sandwich entre l'au moins un insert métallique et l'au moins un absorbeur de choc.

On peut comprendre que la présente invention ne se limite pas au mode de réalisation décrit ci-avant ; les autres modes de réalisation sont évidents pour l'homme du métier.

## Revendications

1. Absorbeur de choc (10) pour véhicule automobile, dans lequel l'absorbeur de choc (10) est en matière plastique et destiné à être fixé par une extrémité à une traverse et par une autre extrémité à une caisse du véhicule, **caractérisé en ce que** au moins un insert métallique (14) qui lie les deux extrémités de l'absorbeur est intégré à l'absorbeur de choc (10),
dans lequel l'absorbeur de choc (10) est une structure creuse et ledit au moins un insert métallique (14) est positionné sur une surface intérieure de l'absorbeur de choc (10).

2. Absorbeur de choc (10) selon la revendication 1, dans lequel ledit au moins un insert métallique (14) est en forme de bandelette.

3. Absorbeur de choc (10) selon la revendication 2, dans lequel la bandelette comporte deux ramifications (142) à une extrémité et une seule ramification (141) à l'autre extrémité, formant un tripode.

4. Absorbeur de choc (10) selon la revendication 2, dans lequel la bandelette comporte deux ramifications (141,142) à chacune des deux extrémités, formant un quadripode.

5. Absorbeur de choc (10) selon l'une quelconque des revendications 1 à 4, dans lequel ledit au moins un insert métallique (14) est intégré à l'absorbeur de choc (10) par un ou une combinaison des moyens suivants : surmoulage par injection, soudage, collage, vissage, rivetage, pincement, contact simple.

6. Absorbeur de choc (10) selon l'une quelconque des revendications 1 à 4, dans lequel ledit au moins un insert métallique (14) est positionné sur une surface extérieure de l'absorbeur de choc.

7. Absorbeur de choc (10) selon l'une quelconque des revendications 1 à 4, dans lequel ledit au moins un insert métallique (14) est noyé dans la matière plastique de l'absorbeur de choc.

8. Absorbeur de choc (10) selon l'une quelconque des revendications 1 à 4, dans lequel ledit au moins un insert métallique (14) est revêtu d'un traitement de surface favorisant une adhésion chimique avec la matière plastique.

9. Absorbeur de choc (10) selon l'une quelconque des revendications 1 à 4, dans lequel ledit au moins un insert métallique (14) comporte un système de remorquage (22).

10. Absorbeur de choc (10) selon la revendication 10, dans lequel le système de remorquage (22) comporte une douille filetée.

11. Poutre de chocs pour véhicule automobile, comprenant une traverse et au moins un absorbeur de choc (10) selon l'une des revendications 1 à 10.

12. Poutre de chocs selon la revendication 11, comprenant au moins un insert métallique (14) positionné entre la traverse et la partie en matière plastique dudit au moins un absorbeur de choc (10).

13. Poutre de chocs selon la revendication 11, comportant au moins un insert métallique (14) positionné de sorte à prendre en sandwich la traverse entre ledit au moins un insert métallique (14) et ledit au moins un absorbeur de choc (10).

14. Poutre de chocs selon l'une quelconque des revendications 11 à 13, dans laquelle le nombre d'absorbeurs de choc (10) est de deux.

## Patentansprüche

1. Stoßdämpfer (10) für Kraftfahrzeug. wobei der Stoßdämpfer (10) aus Kunststoff ist und dazu bestimmt ist, über ein Ende an einem Querträger und über ein anderes Ende an einer Karosserie des Fahrzeugs befestigt zu werden, **dadurch gekennzeichnet, dass** wenigstens ein Metalleinsatz (14), der die zwei Enden des Stoßdämpfers verbindet, in den Stoßdämpfer (10) integriert ist,
wobei der Stoßdämpfer (10) eine hohle Struktur ist und der wenigstens eine Metalleinsatz (14) auf einer Innenfläche des Stoßdämpfers (10) positioniert ist.

2. Stoßdämpfer (10) nach Anspruch 1, wobei der wenigstens eine Metalleinsatz (14) die Form eines Bandes aufweist.

3. Stoßdämpfer (10) nach Anspruch 2, wobei das Band zwei Verzweigungen (142) an einem Ende und nur eine Verzweigung (141) an dem anderen Ende aufweist, die ein Dreibein bilden.

4. Stoßdämpfer (10) nach Anspruch 2, wobei das Band zwei Verzweigungen (141, 142) an jedem der zwei Enden aufweist, die ein Vierbein bilden.

5. Stoßdämpfer (10) nach einem der Ansprüche 1 bis 4, wobei der wenigstens eine Metalleinsatz (14) in den Stoßdämpfer (10) durch eines der folgenden Mittel oder eine Kombination daraus integriert ist: Aufformen durch Spritzgießen, Verschweißen, Verkleben, Verschrauben, Vernieten, Verklemmen, einfachen Kontakt.

6. Stoßdämpfer (10) nach einem der Ansprüche 1 bis 4, wobei der wenigstens eine Metalleinsatz (14) auf einer Außenfläche des Stoßdämpfers positioniert ist.

7. Stoßdämpfer (10) nach einem der Ansprüche 1 bis 4, wobei der wenigstens eine Metalleinsatz (14) in den Kunststoff des Stoßdämpfers eingebettet ist.

8. Stoßdämpfer (10) nach einem der Ansprüche 1 bis 4, wobei der wenigstens eine Metalleinsatz (14) mit einer Oberflächenbehandlung beschichtet ist, die eine chemische Haftung mit dem Kunststoff begünstigt.

9. Stoßdämpfer (10) nach einem der Ansprüche 1 bis 4, wobei der wenigstens eine Metalleinsatz (14) ein Abschleppsystem (22) aufweist.

10. Stoßdämpfer (10) nach Anspruch 10, wobei das Abschleppsystem (22) eine Gewindebuchse aufweist.

11. Stoßfängerträger für Kraftfahrzeug, umfassend einen Querträger und wenigstens einen Stoßdämpfer (10) nach einem der Ansprüche 1 bis 10.

12. Stoßfängerträger nach Anspruch 11, umfassend wenigstens einen Metalleinsatz (14), der zwischen dem Querträger und dem Teil aus Kunststoff des wenigstens einen Stoßdämpfers (10) positioniert ist.

13. Stoßfängerträger nach Anspruch 11, aufweisend wenigstens einen Metalleinsatz (14), der so positioniert ist, dass er den Querträger zwischen dem wenigstens einen Metalleinsatz (14) und dem wenigstens einen Stoßdämpfer (10) sandwichartig in Eingriff nimmt.

14. Stoßfängerträger nach einem der Ansprüche 11 bis 13, wobei die Anzahl an Stoßdämpfern (10) zwei beträgt.

## Claims

1. Shock absorber (10) for a motor vehicle, wherein the shock absorber (10) is made of plastics material and intended to be secured at one end to a cross member and at the other end to a body of the vehicle, **characterized in that** at least one metal insert (14) which connects the two ends of the absorber is integrated with the shock absorber (10), wherein the shock absorber (10) is a hollow structure and said at least one metal insert (14) is positioned on an interior surface of the shock absorber (10).

2. Shock absorber (10) according to claim 1, wherein said at least one metal insert (14) is in the form of a strip.

3. Shock absorber (10) according to claim 2, wherein the strip has two branches (142) at one end and a single branch (141) at the other end, forming a tripod.

4. Shock absorber (10) according to claim 2, wherein the strip has two branches (141, 142) at each of the two ends, forming a quadripod.

5. Shock absorber (10) according to any of claims 1 to 4, wherein said at least one metal insert (14) is integrated with the shock absorber (10) by one or a combination of the following means:
injection molding, welding, gluing, screwing, riveting, clamping, simple contact.

6. Shock absorber (10) according to any of claims 1 to 4, wherein said at least one metal insert (14) is positioned on an exterior surface of the shock absorber.

7. Shock absorber (10) according to any of claims 1 to 4, wherein said at least one metal insert (14) is embedded in the plastics material of the shock absorber.

8. Shock absorber (10) according to any of claims 1 to 4, wherein said at least one metal insert (14) is coated with a surface treatment that promotes chemical adhesion with the plastics material.

9. Shock absorber (10) according to any of claims 1 to 4, wherein said at least one metal insert (14) includes a towing system (22).

10. Shock absorber (10) according to claim 10, wherein the towing system (22) comprises a threaded sleeve.

11. Impact beam for a motor vehicle, comprising a cross member and at least one shock absorber (10) according to any of claims 1 to 10.

12. Impact beam according to claim 11, comprising at least one metal insert (14) positioned between the cross member and the part made of plastics material of said at least one shock absorber (10).

13. Impact beam according to claim 11, comprising at least one metal insert (14) positioned so as to sandwich the cross member between said at least one metal insert (14) and said at least one shock absorber (10).

14. Impact beam according to any of claims 11 to 13, wherein the number of shock absorbers (10) is two.
